(19) Europäisches Patentamt
European Patent Office
Office européen des brevets

(11) **EP 3 256 414 B1**

(12) **EUROPÄISCHE PATENTSCHRIFT**

(45) Veröffentlichungstag und Bekanntmachung des Hinweises auf die Patenterteilung:
**26.06.2019 Patentblatt 2019/26**

(21) Anmeldenummer: **16702662.4**

(22) Anmeldetag: **03.02.2016**

(51) Int Cl.:
*B66C 23/90* (2006.01)     *B66C 13/16* (2006.01)
*B66C 15/06* (2006.01)     *G01L 5/00* (2006.01)
*G01L 5/10* (2006.01)

(86) Internationale Anmeldenummer:
**PCT/EP2016/000173**

(87) Internationale Veröffentlichungsnummer:
**WO 2016/128119 (18.08.2016 Gazette 2016/33)**

(54) **KRAN SOWIE VERFAHREN ZUM ÜBERWACHEN DER ÜBERLASTSICHERUNG EINES SOLCHEN KRANS**

CRANE, AS WELL AS PROCESS FOR MONITORING THE OVERLOAD PROTECTION OF SUCH A CRANE

GRUE AINSI QUE PROCÉDÉ POUR SURVEILLER LA PROTECTION CONTRE LA SURCHARGE D'UNE TELLE GRUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2015 DE 202015001024 U**

(43) Veröffentlichungstag der Anmeldung:
**20.12.2017 Patentblatt 2017/51**

(73) Patentinhaber: **Liebherr-Werk Biberach GmbH**
**88400 Biberach an der Riß (DE)**

(72) Erfinder: **HESS, Alfred**
**88484 Gutenzell-Hürbel (DE)**

(74) Vertreter: **Thoma, Michael**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**EP-A1- 0 667 315     CN-A- 1 139 413**
**JP-A- 2000 191 286     JP-A- 2008 110 825**
**JP-B2- 3 281 481     JP-B2- 4 224 929**

## Beschreibung

Die vorliegende Erfindung betrifft einen Kran mit einem Ausleger, an dem zumindest ein Lastaufnahmemittel anhebbar und absenkbar angeordnet ist, wobei eine Überlastsicherungsvorrichtung Erfassungsmittel zum Erfassen der Ausladung und der Last an dem zumindest einen Lastaufnahmemittel aufweist, und wobei eine Überwachungsvorrichtung zum Überwachen der Überlastsicherungsvorrichtung vorgesehen ist und Bestimmungsmittel zum Bestimmen einer den Ausleger haltenden und/oder in einer Abspannung induzierten Abspannkraft aufweist. Die Erfindung betrifft ferner auch ein Verfahren zum Überwachen der Überlastsicherungsvorrichtung eines solchen Krans.

An Kranen wie Baukranen, beispielsweise Mobilbaukranen, Turmdrehkranen oder Nadelauslegerkranen mit wippbarem Ausleger, wird üblicherweise mittels einer Kransteuerung bzw. einer darin implementierten Überlastsicherungsvorrichtung die Kranbelastung daraufhin überwacht, ob eine kritische Lastgrenze erreicht wird, so dass der Kran umzufallen droht oder in anderer Weise gefährdet ist, um dann ggf. rechtzeitig die entsprechenden Antriebseinrichtungen des Krans abzuschalten. Eine solche Überlastsicherungsvorrichtung arbeitet dabei üblicherweise mit abgespeicherten Lastkurven, die für eine jeweilige Ausladung die zulässige Last angeben, wobei am Kran mittels Sensoren die tatsächliche Ausladung und die tatsächliche Last erfasst und mit der durch die abgespeicherte Lastkurve zulässigen Last für die jeweilige Ausladung verglichen wird. Nähert sich der tatsächliche, erfasste Lastzustand der Lastkurve bzw. wird diese erreicht oder gar überschritten, werden die Kranantriebe von der Überlastsicherungsvorrichtung abgeschaltet oder zumindest verlangsamt und/oder es wird ein entsprechendes Warnsignal angezeigt. Die tatsächliche Last kann hierbei beispielsweise aus dem Hubseilzug unter Berücksichtigung der Einscherung bestimmt werden, beispielsweise mittels eines die Antriebskraft der Hubseilwinde angebenden Hubkraftsensors oder auch Umlenkrollen oder -flaschen zugeordneten Kraftsensoren. Die Ausladung, also der horizontale Abstand von einer angenommenen Kippachse, insbesondere von der Anlenk- oder Wippachse des Auslegers, kann je nach Krantyp in verschiedener Weise bestimmt werden, beispielsweise mittels eines Stellungssensors, der die Stellung einer Katzseilwinde angibt, oder einem Winkelstellungsgeber, der den Anstellwinkel des Auslegers angibt oder anderen geeigneten Ausladungssensoren, wobei auch mehrere solcher Sensoren bzw. Erfassungsmittel in Kombination miteinander vorgesehen sein können.

Eine solche Überlastsicherungsvorrichtung kann jedoch nur sicher und verlässlich arbeiten, wenn die genannten Erfassungsmittel die Ausladung und die Last tatsächlich korrekt und präzise erfassen und keine falschen Werte liefern. Im rauen Kranbetrieb kann es jedoch vorkommen, dass beispielsweise Winkelsensoren, die den Ausleger anstellwinkel erfassen sollen, verrutschen, oder die Lasterfassungsmittel die tatsächliche Last falsch erfassen, weil sie von einer falschen Seileinscherung ausgehen. Wird beispielsweise der Lasthaken mit einer zweifachen Einscherung gefahren, geht jedoch die Überlastsicherungsvorrichtung nur von einer einfachen Einscherung aus, hängt am Lasthaken tatsächlich eine doppelt so große Last als von den Lasterfassungsmitteln angegeben wird. Infolge solcher Fehler würde die Überlastsicherungsvorrichtung von falschen Werten der tatsächlichen Ausladung und/oder der tatsächlichen Last ausgehen, so dass trotz Vergleich mit dem zulässigen Lastwert für die entsprechende Ausladung gemäß gespeicherter Lastkurve die Standsicherheit des Krans gefährdet sein kann.

Um derartige Fehlfunktionen zu verhindern, wurde bereits angedacht, die Überlastsicherungsvorrichtung mit einer Überwachungsvorrichtung zu überwachen und hierzu zu schauen, ob eine in der Abspannung des Auslegers tatsächlich induzierte Abspannkraft der erwarteten Abspannkraft entspricht, die aufgrund der von den Sensoren bzw. Erfassungsmitteln der Überlastsicherungsvorrichtung angegebenen Ausladungs- und Lastwerten zu erwarten ist. Hierzu kann die während eines Skaliervorganges gemessene Abspannkraft den erfassten Last- und Ausladungswerten zugeordnet bzw. damit abgeglichen werden, so dass bei zu großen Abweichungen auf eine Fehlfunktion der Überlastsicherungsvorrichtung geschlossen werden kann. Ein solcher Skaliervorgang mit Abgleichen der induzierten Abspannkraft mit den von der Überlastsicherungsvorrichtung erfassten Last- und Ausladungswerten ist jedoch relativ aufwändig und kann bei im Kranbetrieb erst auftretenden Veränderungen nicht mit ausreichender Genauigkeit und Sicherheit Fehlfunktionen wirklich ausschließen.

Aus der Schrift EP 0 667 315 A1 ist ein Turmdrehkran bekannt, dessen Überlastsicherung aus der gemessenen Last und der gemessenen Ausladung ein dem Lastmoment entsprechendes Produkt errechnet. Zusätzlich wird das Lastmoment unmittelbar gemessen, und zwar mittels eines Lastmomentsensors, der die Verformung eines Eckstiels der Turmspitze erfasst. Das unmittelbar gemessene Lastmoment wird mit dem errechneten Produkt verglichen, wobei bei einer Abweichung des unmittelbar gemessenen Lastmoments von dem Produkt um einen vorgegebenen Wert ein Signal abgegeben wird.

Aus den Schriften CN 1139413 A, JP 2000-191 286 A, JP 4224929 B2, JP 2008-110 825 A und JP 3281481 B2 sind weiterhin Krane bekannt, deren Überlastsicherung aus der gemessenen Last, der gemessenen Ausladung und einem Auslegerwippwinkel ein Lastmoment und ein Totmoment berechnet und aufsummiert und mit einem zulässigen Kippmoment vergleicht.

Der vorliegenden Erfindung liegt daher die Aufgabe zugrunde, einen verbesserten Kran und ein verbessertes Verfahren zum Überwachen der Überlastsicherungsvorrichtung anzugeben, die Nachteile des Standes der Technik vermeiden und Letzteren in vorteilhafter Weise weiterbilden. Insbesondere soll ohne aufwändige Skaliervorgänge eine präzise und dauerhaft verlässliche Überwachung der Überlastsicherungsvorrichtung und deren Last- und Ausladungserfassungsmittel geschaffen werden.

Erfindungsgemäß wird die genannte Aufgabe durch einen Kran gemäß Anspruch 1 sowie ein Verfahren gemäß Anspruch 7 gelöst. Bevorzugte Ausgestaltungen der Erfindung sind Gegenstand der abhängigen Ansprüche.

Es wird also vorgeschlagen, beim Abgleich der zueinander gegenläufig auf den Kran bzw. Ausleger wirkenden Momente auch das durch das Gewicht des

Auslegers und ggf. weiterer Krankomponenten entstehende Totmoment zu berücksichtigen und den Momentenabgleich kontinuierlich auch im Kranbetrieb als Hintergrundüberwachung auszuführen. Erfindungsgemäß ist vorgesehen, dass die Überwachungsvorrichtung online im Kranbetrieb aus der laufend bestimmten Abspannkraft ein Abspannmoment bestimmt, aus der laufend erfassten Ausladung und der laufend erfassten Last ein Lastmoment bestimmt, unter Zuhilfenahme von gespeicherten Krandaten ein Totmoment bestimmt, die Summe aus dem genannten Lastmoment und dem genannten Totmoment mit dem genannten Abspannmoment abgleicht und dann, wenn eine beim Abgleichen festgestellte Abweichung eine Toleranzschwelle überschreitet, ein Fehler- und/oder Abschaltsignal abgibt. Wenn die Auswerteeinheit feststellt, dass das von dem Momentenberechner berechnete Abspannmoment nicht mit der Summe der gegenläufig wirkenden Last- und Totmomente übereinstimmt bzw. zu stark hiervon abweicht, kann davon ausgegangen werden, dass mit der Sensorik bzw. den Erfassungsmitteln der Überlastsicherungsvorrichtung, die die Last und Ausladung erfassen, etwas nicht stimmt bzw. die Überlastsicherungsvorrichtung falsch rechnet. Die genannte Toleranzschwelle kann dabei passend festgelegt sein, um variablen Nebenlasten wie beispielsweise Windkräften, nachträglich angebrachten Reklametafeln am Ausleger oder anderen Störgrößen wie beispielsweise üblichen Messtoleranzen Rechnung zu tragen.

Durch die Berücksichtigung auch des Totmoments des Auslegers und ggf. daran angebrachter Anbauteile wie ein Katzfahrseil, zusätzlicher Umlenkrollen oder einer Auslegerverlängerung in Form eines Flyjibs kann die Überwachung deutlich präziser und genauer erfolgen und auch schon kleinere Fehler beispielsweise durch Verrutschen von Winkelsensoren bemerkt werden, wobei durch die Bestimmung des Totmoments mit Hilfe gespeicherter Krandaten ein aufwändiger Skaliervorgang nicht mehr zwingend ist bzw. der Bediener bei einem Skalieren, d.h. Einstellen des Krans keine speziellen Parameter mehr konfigurieren muss. Die zur Überwachung notwendigen Daten können halb- oder vollautomatisch beim Einrichten des Krans im Hintergrund geladen werden.

In Weiterbildung der Erfindung kann mit der genannten Überwachungsvorrichtung insbesondere auch ein Kran mit einem wippbaren Ausleger und der für die Bestimmung des Auslegeranstellwinkels vorgesehene Winkelerfasser der Überlastsicherungsvorrichtung überwacht werden. Der genannte Winkelerfasser kann hierbei grundsätzlich verschieden ausgebildet sein, beispielsweise ein Winkelstellungsgeber sein, der im Bereich der Wippachse des Auslegers angebracht ist. Alternativ oder zusätzlich kann als Winkelerfasser auch ein Trommelstellungs- und/oder Antriebsstellungssensor vorgesehen sein, der einem Einziehwerk zugeordnet ist und/oder die Stellung des Abspannseils und/oder - gestänges für den Ausleger und damit den Auslegeranstellwinkel erfasst.

Vorteilhafterweise wird der mit Hilfe des genannten Anstell- bzw. Wippwinkelerfassers bestimmte Auslegeranstellwinkel dabei sowohl beim Bestimmen des Lastmoments als auch beim Bestimmen des Totmoments berücksichtigt, da eine Veränderung des Auslegeranstellwinkels sowohl die Ausladung des Lastaufnahmemittels als auch den Hebelarm bzw. die Ausladung des Schwerpunkts der Auslegertotmasse beeinflussen kann. Die Überwachungsvorrichtung bzw. deren Momentenrechner kann das zuvor genannte Totmoment anhand der gespeicherten Krandaten, die das Auslegergewicht, die Auslegerlänge, die Schwerpunktlage und/oder den Schwerpunktabstand von der Wippachse des Auslegers umfassen können, unter Berücksichtigung des genannten Auslegeranstell- bzw. Wippwinkels berechnen. Insbesondere kann durch Berücksichtigung des Auslegerwippwinkels dem Umstand Rechnung getragen werden, dass mit zunehmend steiler gestelltem Ausleger der Hebelarm der Totmasse und damit das Totmoment kleiner wird. In ähnlicher Weise kann der Momentenrechner auch für das Lastmoment den Anstellwinkel berücksichtigen, da der Hebelarm bzw. die Ausladung des Lastaufnahmemittels und damit das sich ergebende Lastmoment mit zunehmend steiler stehendem Ausleger kleiner wird.

In Weiterbildung der Erfindung kann der von dem genannten Winkelerfasser bzw. Wippwinkelgeber bestimmte Auslegeranstellwinkel jedoch nicht nur bei der Berechnung des Totmoments und des Lastmoments berücksichtigt werden, sondern auch bei der Berechnung des in entgegengesetzter Richtung drehenden Abspannmoments, da sich üblicherweise durch Verstellen des Auslegeranstellwinkels auch der effektive Hebelarm der Abspannung verändert.

Vorteilhafterweise berechnet die Überwachungsvorrichtung bzw. deren Momentenrechner aus dem jeweils bestimmten Auslegeranstellwinkel bzw. Wippwinkel einen Hebelarm der Abspannkraft auf den Ausleger, die Ausladung des zumindest einen Lastaufnahmemittels sowie den Hebelarm der Totlast des Auslegers, um dann unter ergänzendem Heranziehen der jeweils bestimmten Abspannkraft, der jeweils bestimmten Last und des abgespeicherten Auslegertotgewichts die im Uhrzeigersinn und gegen den Uhrzeigersinn drehenden Momente zu berechnen und miteinander abzugleichen.

Besitzt der Kran mehr als ein Lastaufnahmemittel, beispielsweise in Form eines ersten Lasthakens, der von einem Hauptteil des Auslegers oder von einer Laufkatze abläuft, und eines zweiten Lasthakens, der von einer Auslegerverlängerung bzw. einem sog. Flyjib abläuft, können für die mehreren Lastaufnahmemittel jeweils individuelle Hebelarme bestimmt bzw. Ausladungen berücksichtigt werden, um die jeweils erzeugten Lastmomente präzise zu bestimmen.

Bei der genannten Bestimmung der Hebelarme der Abspannkraft, des zumindest einen Lastaufnahmemittels und der Totlast kann die Überwachungseinrichtung vorteilhafterweise davon ausgehen, dass der Hebelarm auf eine gemeinsame Kippachse bezogen werden kann. Insbesondere kann die Überwachungseinrichtung alle Hebelarme der Abspann-, Last- und Totlastkräfte auf die Wippachse des Auslegers beziehen, wodurch eine einfache und doch hinreichend präzise Momentenberechnung erzielt werden kann. Das hierfür herangezogene Berechnungsmodell, das die Überwachungsvorrichtung verwendet, wird hierdurch deutlich vereinfacht, ohne an Genauigkeit einzubüßen.

Grundsätzlich kann für die Momentenberechnung jedoch auch auf verschiedene bzw. andere Kippachsen abgestellt werden, beispielsweise den Fußpunkt des Turms eines Turmdrehkrans oder einen unter dem Ausleger liegenden Unterwagen-Abstützpunkt. Die vorgenannte Berechnung der Hebelarme bezogen auf die Wippachse des Auslegers vereinfacht jedoch die Momentenberechnung spürbar.

Die vorgenannten Bestimmungsmittel zum Bestimmen der den Ausleger haltenden bzw. in der Abspannung induzierten Abspannkraft können grundsätzlich verschieden ausgebildet sein. Beispielsweise kann in vorteilhafter Weiterbildung der Erfindung ein Kraftgeber dem Nackenseil oder dem Nackenabspanngestänge, das den Ausleger hält, zugeordnet sein, um direkt die Abspannkraft zu messen. Alternativ oder zusätzlich kann auch zumindest ein Kraftgeber einer Abspannstrebe oder -stütze beispielsweise in Form einer Turmspitze, über die die Abspannverseilung läuft, zugeordnet sein, um vom Abspannseil oder -gestänge induzierte Reaktionskräfte in der Abspannstütze zu erfassen. Alternativ oder zusätzlich können auch Kraft- und/oder Dehnungs- und/oder Biegeverformungsgeber einem Strukturteil des Krans zugeordnet sein, welches durch die Abspannkraft eine entsprechende Verformung erfährt. Beispielsweise kann bei einem Turmdrehkran in Form eines Obendrehers das in den Turm eingeleitete Biegemoment bzw. die im Turm resultierende Biege- und/oder Dehnungsbelastung erfasst werden, welche ein Maß für das den Last- und Totmomenten entgegenwirkende Abspann- bzw. Reaktionsmoment ist.

Die im Kontext der vorliegenden Erfindung verwendete Abspannkraft kann insofern die direkt in einer Abspannung induzierte bzw. den Ausleger haltende Kraft oder auch eine damit zusammenhängende Reaktionskraft meinen, die in einem Strukturteil des Krans auftritt und ein Maß für das den Last- und Totmomenten entgegenwirkende Abspann- oder Reaktionsmoment ist.

Die Erfindung wird nachfolgend anhand bevorzugter Ausführungsbeispiele und zugehöriger Zeichnungen näher erläutert. In den Zeichnungen zeigen:

Fig. 1: eine schematische, ausschnittsweise Darstellung eines Turmdrehkrans mit wippbarem Ausleger und am Ausleger angebrachter Auslegerverlängerung in Form eines Flyjibs, sowie der am Ausleger angreifende Kräfte und Momente,

Fig. 2: ein Datenflussdiagramm zur Verdeutlichung der Bestimmung der Last- und Ausladungs- bzw. Hebelarmwerte, der hieraus abgeleiteten Momentenberechnung und des Abgleichs der im Uhrzeigersinn drehenden Momente mit den im Gegenuhrzeigersinn drehenden Momenten,

Fig. 3: eine schematische Darstellung verschiedener Krantypen und der Anbringungsmöglichkeiten der Bestimmungsmittel zum Bestimmen der durch Nutz- und Totlasten induzierten Abspannkraft, und

Fig. 4: eine Lastkurve der Überlastsicherungsvorrichtung für einen Turmdrehkran mit horizontaler Wippstellung des Auslegers.

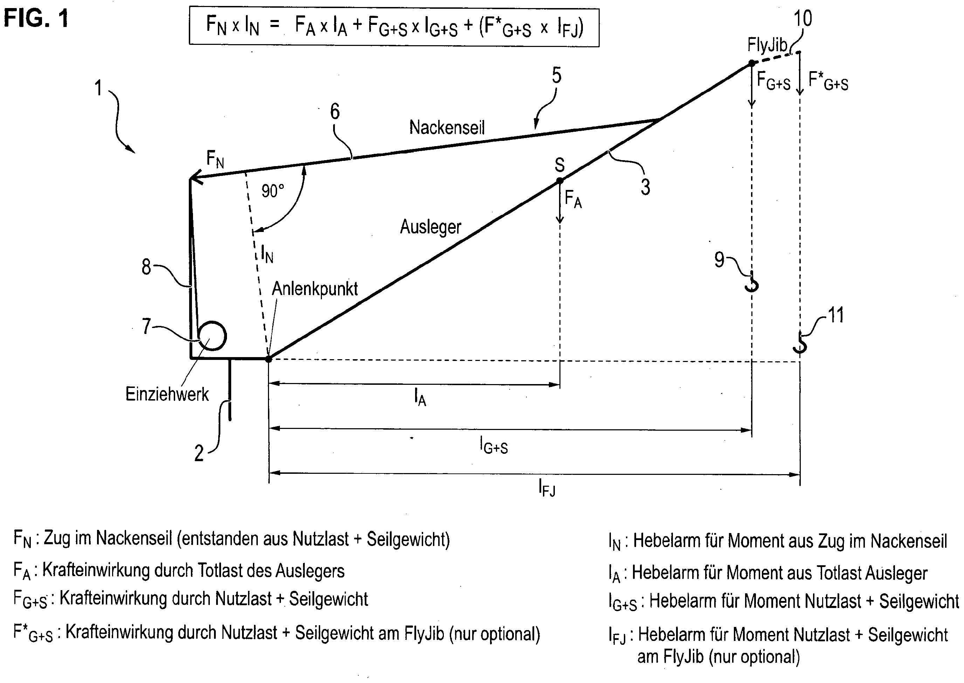

Wie Fig. 1 andeutet, kann der Kran 1 als Baukran bzw. Turmdrehkran ausgebildet sein, der einen Turm 2 umfasst, der auf einer Drehbühne 3 abgestützt sein kann, die auf einem Unterwagen sitzen und um eine aufrechte Drehachse gedreht werden kann. Bei Ausbildung als Obendreher kann der genannte Turm 2 jedoch auch rotatorisch feststehend verankert sein. Der vorgenannte Unterwagen kann als Lastkraftwagen, Raupenwagen oder in anderer Weise verfahrbar ausgebildet sein, jedoch auch eine fest verankerte bzw. fest abgestützte Abstützbasis sein.

Der genannte Turm 2 kann einen Ausleger 3 tragen, der um eine liegende Wippachse 4, die sich am Fuß des Auslegers 3 bzw. zwischen Turm 2 und Ausleger 3 erstrecken kann, auf und nieder gewippt werden kann. Bei Ausbildung als Obendreher kann der Ausleger 3 zudem um eine aufrechte Achse, insbesondere die Turmlängsachse um den Turm 2 verdreht werden.

Der genannte Ausleger 3 ist über eine Abspannung 5 abgespannt, wobei die genannte Abspannung 5 ein von einem Einziehwerk 7 verstellbares Nackenseil 7 aufweisen kann, um den Wippwinkel bzw. den Anstellwinkel des Auslegers 3 vorzugsweise stufenlos verstellen zu können. Das genannte Nackenseil 7 kann hierbei über eine nur angedeutete Turmspitze 8 geführt bzw. umgelenkt sein, wobei jedoch alternativ oder zusätzlich auch andere Abstützstreben und insbesondere anstelle eines Abspannseils auch ein Abspanngestänge vorgesehen sein kann.

Wie Fig. 1 zeigt, kann über eine entsprechende Umlenkrolle im Bereich der Auslegerspitze ein Hubseil mit einem daran angelenkten Lasthaken 9 ablaufen, wobei der genannte Lasthaken 9 bzw. das damit verbundene Hubseil auch über eine Laufkatze geführt sein könnte, die entlang dem Ausleger 3 in an sich bekannter Weise verfahren werden kann.

Wie Fig. 1 weiter zeigt, kann an dem Ausleger 3 eine Auslegerverlängerung 10 in Form eines Flyjibs angebracht sein, wobei von dem besagten Flyjib ein weiteres Lastaufnahmemittel in Form eines Lasthakens 11 an einem entsprechenden Hubseil ablaufen kann.

Wie Fig. 1 verdeutlicht, wirken am Ausleger 3 mehrere Nutz- und Totlastkräfte, die verschiedene Hebelarme besitzen und gemäß Fig. 1 im Uhrzeigersinn drehende Momente auf den Ausleger 3 ausüben. Die vom Ausleger 3 bzw. der Auslegerverlängerung 10 ablaufenden Lasthaken 9 und 11 ziehen den Ausleger 3 gemäß Fig. 1 im Uhrzeigersinn nach unten, wobei die Kräfte $F_{G+S}$ und $F^*_{G+S}$ sich jeweils aus der am Lasthaken 9 bzw. 11 befestigten Nutzlast und dem Seil und Hakengewicht ergeben. Die horizontale Ausladung der genannten Kräfte $F_{G+S}$ und $F^*_{G+S}$ bestimmt deren Hebelarm $I_{G+S}$ und $I_{FJ}$ bezüglich der Wippachse 4 des Auslegers 3, die als Kippachse angesehen werden kann.

Ferner versucht die Totlast des Auslegers 3 diesen Ausleger 3 mit der Kraft $F_A$ gemäß Fig. 1 im Uhrzeigersinn nach unten zu ziehen, wobei die genannten Totlast sich aus dem Eigengewicht des Auslegers 3, dem Eigengewicht des Flyjibs bzw. der Auslegerverlängerung 10 und ggf. daran angebrachter Zusatzbauteile wie beispielsweise einem Laufkatzseil, Umlenkrollen, Scheinwerfer, Winden, Stellaktoren und anderen Anbauteilen zusammensetzen kann. Die die Totlast repräsentierende Totlastkraft $F_A$ kann dabei als im Schwerpunkt S angreifend angesehen werden, vgl. Fig. 1. Die genannten Totlasten bzw. Gewichtskräfte und die Geometrie des Auslegers einschließlich des Abstands des Schwerpunkts S von der Wippachse 4 kann in Form von Krandaten in einem Speicher 12 der Kransteuerung 13 abgespeichert sein.

Andererseits greift an dem genannten Ausleger 3 die Abspannkraft $F_N$ an, die von dem vorgenannten Nackenseil der Abspannung 5 aufgebracht werden kann und gemäß Fig. 1 im Gegenuhrzeigersinn den Ausleger 3 nach oben zu ziehen versucht.

Die genannte Abspannkraft $F_N$ besitzt dabei den in Fig. 1 ersichtlichen Hebelarm $I_N$, der eine durch die Wippachse 4 gehende Gerade senkrecht auf das Nackenseil 7 bildet.

Um den Ausleger 3 im Gleichgewicht zu halten, muss die Summe aller im Uhrzeigersinn drehenden Momente der Summe aller im Gegenuhrzeigersinn drehenden Moment entsprechen. Im Hinblick auf die zuvor erläuterten Kräfte und Momente heißt dies, dass das Abspannmoment infolge der Abspannkraft $F_N$ der Summe der Lastmomente durch die Lasthaken 9 und 11 und des Totlastmoments entsprechen muss, wie dies nachfolgende Gleichung zum Ausdruck bringt:

$$F_N \times I_N = F_A \times I_A + F_{G+S} \times I_{G+S} + F^*_{G+S} \times I_{FJ}$$

Wie aus Fig. 1 ersichtlich, werden die genannten Hebelarme $I_A$, $I_{G+S}$ und $I_{FJ}$ der Nutz- und Totlasten und auch der Hebelarm $I_N$ der Abspannkraft $F_N$ vom Wippwinkel bzw. Anstellwinkel des Auslegers 3 beeinflusst, wobei die genannten Hebelarme $I_A$, $I_{G+S}$ und $I_{FJ}$ der Tot- und Nutzlasten sich bei Winkelveränderungen des Anstellwinkels des Auslegers 3 deutlich stärker verändern als der Hebelarm $I_N$ der Abspannkraft $F_N$, zumindest in den üblichen Anstellwinkelbereichen des Auslegers 3, die sich zwischen einer horizontalen Ausrichtung des Auslegers 3 und einer spitzwinklig zur Vertikalen nach oben zeigenden Ausrichtung des Auslegers 3 reichen können. Die geringere Beeinflussung des Hebelarms $I_N$ der Abspannkraft $F_N$ liegt im Wesentlichen in der Geometrie der Abspannung begründet, da sich der Abspannwinkel des Nackenseils 6 zum Ausleger 3 beim Verwippen des Auslegers 3 verhältnismäßig schwach verstellt, wenn der Ausleger 3 in an sich üblicher Weise eine recht große Länge im Verhältnis zur Höhe der Turmspitze besitzt.

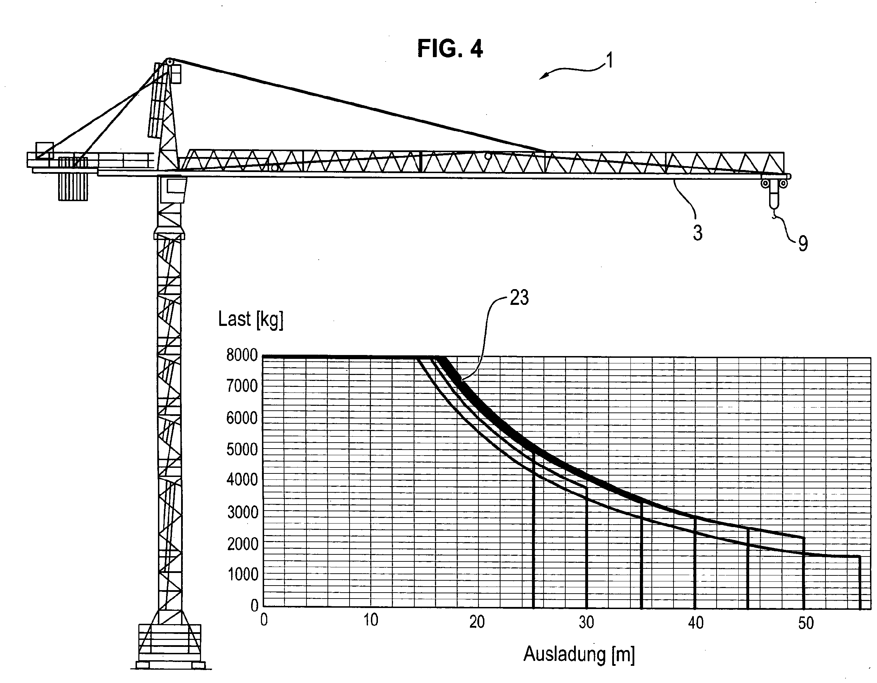

Eine in der Kransteuerung 13 implementierte Überlastsicherungsvorrichtung 14 bestimmt mit geeigneten Erfassungsmitteln 15 und 16 die Ausladung der Nutzlasten $F_{G+S}$ und $F^*_{G+S}$ sowie die genannten Nutzlasten selbst. Hierzu kann ein Winkelgeber 17 den Wipp- bzw. Anstellwinkel des Auslegers 3 erfassen, so dass über die abgespeicherte Krangeometrie bzw. Auslegergeometriedaten die Ausladung, d.h. die genannten Hebelarme $I_{G+S}$ und $I_{FJ}$ bestimmbar sind. Ist eine Laufkatze am Ausleger 3 verfahrbar, kann zusätzlich ein Katzstellungsgeber vorgesehen sein. Zum anderen können die zu den Lasthaken 9 und 11 führenden Hubseile mit Hubkraftgebern 18 versehen sein, die den Hubwindenantrieben oder Umlenkrollenaufhängungen zugeordnet sein können, um die Hubseilkräfte zu bestimmen. Aus den entsprechend bestimmten Lastwerten und Ausladungswerten kann die genannte Überlastsicherungsvorrichtung 14 einen Abgleich mit einer oder auch mehreren Lastkurven vornehmen, die im Speicher der Kransteuerung 13 abgespeichert sein kann/können. Eine solche abgespeicherte Lastkurve 23 zeigt beispielhaft die Fig. 4.

Um die Funktion der genannten Überlastsicherungsvorrichtung 14 im Hintergrund überwachen zu können, ist ferner eine Überwachungsvorrichtung 19 vorgesehen, die aus den zuvor genannten Nutz- und Totlasten $F_{G+S}$, $F^*_{G+S}$

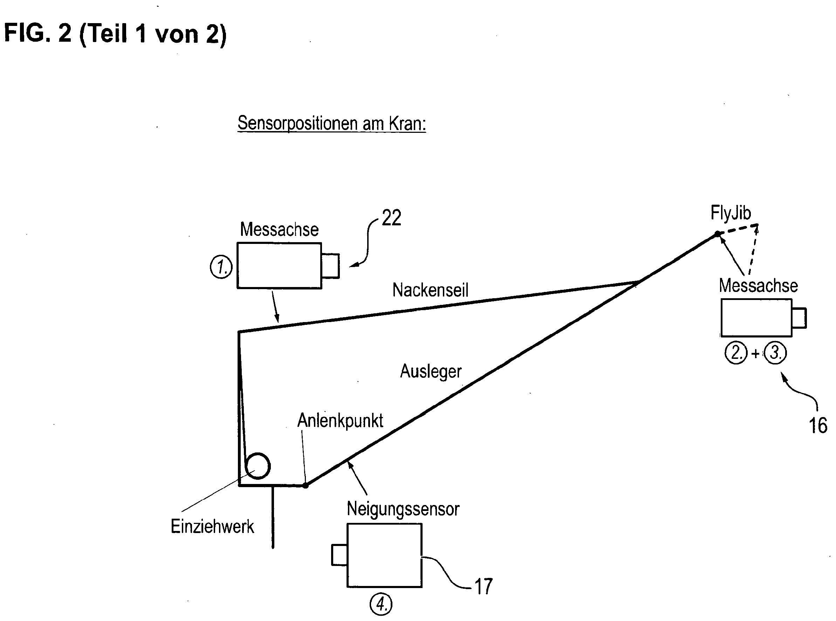

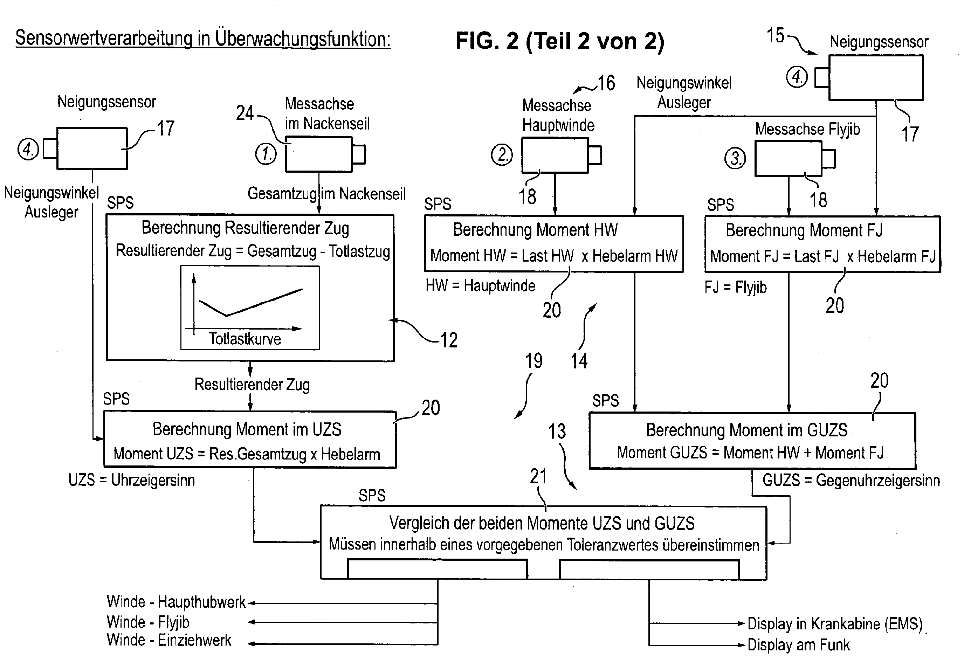

und $F_A$ und den zugehörigen Ausladungswerten bzw. Hebelarmen $I_{G+S}$, $I_{FJ}$ und $I_A$ die auf den Ausleger 3 wirkenden Nutzlast- und Totlastmomente berechnet. Diese Nutz- und Totlastmomente wirken alle im Uhrzeigersinn gemäß Fig. 1 und Fig. 2.

Zum anderen berechnet die genannte Überwachungsvorrichtung 19 bzw. der darin implementierte Momentenrechner 20 das im Gegenuhrzeigersinn gemäß Fig. 1 und Fig. 2 auf den Ausleger 3 wirkende Abspannmoment, das sich aus der Abspannkraft $F_N$ und dem zugeordneten Hebelarm $I_N$ ergibt. Wie zuvor erläutert, wird bei der Momentenberechnung, genauer gesagt bei der Bestimmung der Hebelarme der Anstellwinkel des Auslegers 3 berücksichtigt, der von dem genannten Winkelgeber 17 gemessen wird.

Eine Auswerteeinheit 21 der Überwachungsvorrichtung 19 vergleicht sodann das genannte im Gegenuhrzeigersinn drehende Abspannmoment mit der Summe der im Uhrzeigersinn drehenden Last- und Totlastmomente, vgl. Fig. 2. Genauer gesagt bestimmt die genannte Auswerteeinheit 21 die Differenz zwischen dem besagten im Gegenuhrzeigersinn drehenden Abspannmoment und der Summe der im Uhrzeigersinn drehenden Last- und Totlastmomente. Übersteigt die sich ergebende Differenz eine bestimmte Toleranzschwelle, schließt die Auswerteeinheit 21 daraus, dass die Überlastsicherungsvorrichtung 14, insbesondere deren Erfassungsmittel 15 und 16 nicht ordnungsgemäß arbeitet.

Die Auswerteeinheit 21 kann in einem solchen Fall einerseits eine Fehlermeldung ausgeben, was an einer Anzeigevorrichtung in der Krankabine und/oder an einer Anzeigevorrichtung am Funkterminal ausgegeben werden kann. Andererseits kann die Auswerteeinheit 21 auch ein Abschaltsignal ausgeben, um Stellantriebe, insbesondere einen Haupthubwerksantrieb und/oder einen Flyjibwindenantrieb und/oder einen Einziehwerkantrieb abzuschalten.

Die genannte Toleranzschwelle dient dazu, Störgrößen wie Windkräfte, nachträglich angebrachte Reklameschilder am Ausleger oder andere Störgrößen zu berücksichtigen und kann in Form eines festen, vorbestimmten Schwellenwerts im Speicher 12 der Kransteuerung 13 abgelegt sein. Alternativ oder zusätzlich kann der genannte Toleranzschwellenwert auch an sich ergebende Störgrößen angepasst werden, beispielsweise in Abhängigkeit eines Windmesssignals, insbesondere derart, dass bei keinem oder geringem Wind die Toleranzschwelle erniedrigt und mit zunehmend größerem, stärkerem Wind die Toleranzschwelle erhöht wird. Eine Anpassung des Toleranzschwellwerts in Abhängigkeit anderer Einflussgrößen ist denkbar.

Wie Fig. 2 zeigt, kann die Überwachungsvorrichtung 19 die Abspannkraft $F_N$ mittels eines Kraftgebers 24 bestimmen bzw. sensorisch erfassen, wobei der besagte Kraftgeber 24 unmittelbar der Abspannung 5 bzw. dem Nackenseil 6 zugeordnet sein kann. Beispielsweise kann der Kraftgeber 24 das Windenmoment des Einziehwerks 7 erfassen, auf dem das Nackenseil 6 aufgewickelt ist.

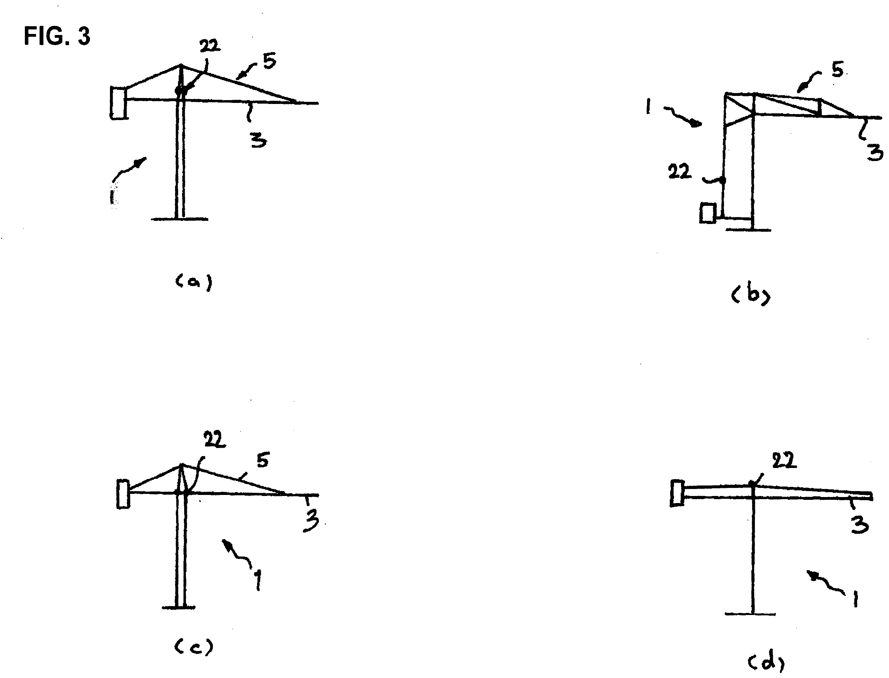

Wie Fig. 3 zeigt, kann die vom Ausleger 3 und den daran wirkenden Nutz- und Totlasten hervorgerufene Reaktionskraft bzw. Abspannkraft bzw. das entsprechende Reaktionsmoment auch durch andere Bestimmungsmittel 22 erfasst werden. Alternativ oder zusätzlich zu dem vorgenannten Kraftgeber 24 können die genannten Bestimmungsmittel 22 beispielsweise einen Kraft- und/oder Momentenerfasser 25 aufweisen, der die von der Abspannung in einer Abspannstrebe induzierten Kraft- und/oder Momentenreaktionen erfasst, beispielsweise in einer Turmspitze 8, vgl. Fig. 3 (a). Beispielsweise können den Lagerbolzen oder -achsen der Turmspitze 8 Kraftgeber oder Streben oder Strukturteilen der Turmspitze 8 zugeordnete Momentenmesser oder Dehnungsmessstreifen zugeordnet sein.

Wie Fig. 3 (b) zeigt, können die Bestimmungsmittel 22 zum Bestimmen der vorgenannten Abspannkraft auch dem vertikalen Abspannteil zugeordnet sein, der zum Oberwagen bzw. zum Ballast am Fuß des Turms 2 führt.

Wie Fig. 3 (d) zeigt, kann bei einem Turmdrehkran ohne Turmspitze die Abspannkraft durch die Bestimmungsmittel 22 auch in Form des Zugs im Obergurt erfasst werden.

**Patentansprüche**

1. Kran mit einem Ausleger (3), an dem zumindest ein Lastaufnahmemittel (9, 11) anhebbar und absenkbar angebracht ist, wobei eine Überlastsicherungsvorrichtung (14) Erfassungsmittel (15, 16) zum Erfassen der Ausladung und der Last an dem zumindest einen Lastaufnahmemittel (9, 11) aufweist und dazu ausgebildet ist, die erfasste Last und die erfasste Ausladung mit einer abgespeicherten Lastkurve abzugleichen und bei Erreichen oder Überschreiten der Lastkurve einen Kranantrieb abzuschalten und/oder zu verlangsamen, und wobei eine Überwachungsvorrichtung (19) zum Überwachen der Überlastsicherungsvorrichtung (14) vorgesehen ist und Bestimmungsmittel (22) zum Bestimmen einer den Ausleger (3) haltenden und/oder in einer Abspannung (5) induzierten Abspannkraft aufweist, wobei die Überwachungsvorrichtung (19) dazu ausgebildet ist, aus der erfassten Ausladung ($I_{G+S}$, $I_{FJ}$) und der erfassten Last ($F_{G+S}$, $F^*_{G+S}$) ein Lastmoment ($F_{C+S}$ x $I_{G+S}$ + $F^*_{G+S}$ x $I_{FJ}$) zu bestimmen, **dadurch gekennzeichnet, dass** die Überwachungsvorrichtung (19) dazu ausgebildet ist, online im Kranbetrieb aus der bestimmten Abspannkraft ($F_N$) ein Abspannmoment ($F_N$ x $I_N$) zu bestimmen, unter Zuhilfenahme von gespeicherten Krandaten ein Totmoment ($F_A$ x $I_A$) zu bestimmen, die Summe aus besagtem Lastmoment ($F_{G+S}$ x $I_{G+S}$ + $F^*_{G+S}$ x $I_{FJ}$) und besagtem Totmoment ($F_A$ x $I_A$) mit dem Abspannmoment ($F_N$ x $I_N$) abzugleichen und dann, wenn eine Abweichung des Abspannmoments von der genannten Summe aus Lastmoment und Totmoment eine Toleranzschwelle überschreitet, ein Fehler- und/oder Abschaltsignal abzugeben.

2. Kran nach dem vorhergehenden Anspruch, wobei der Ausleger (3) um eine liegende Wippachse (4) wippbar gelagert ist und die Erfassungsmittel (15) der Überlastsicherungsvorrichtung (14) zum Erfassen der Ausladung einen Wippwinkelgeber (17) zum Bestimmen eines Auslegerwipp- bzw. -anstellwinkels ($\beta$) aufweisen, wobei die Überwachungs-vorrichtung (19) dazu ausgebildet ist, den von dem Wippwinkelgeber (17) bestimmten Auslegeranstellwinkel ($\beta$) sowohl beim Bestimmen des Lastmoments und des Totmoments als auch beim Bestimmen des Abspannmoments zu berücksichtigen.

3. Kran nach dem vorhergehenden Anspruch, wobei von der Überwachungsvorrichtung (19) aus dem durch den Wippwinkelgeber (17) bestimmten Auslegeranstellwinkel ($\beta$) ein Hebelarm ($I_N$) der Abspannkraft ($F_N$) auf den Ausleger (3), die Ausladung ($I_{G+S}$, $I_{FJ}$) des zumindest einen Lastaufnahmemittels (9, 11) und der Hebelarm ($I_A$) der Totlastkraft ($F_A$) des Auslegers (3) berechenbar ist.

4. Kran nach einem der vorhergehenden Ansprüche, wobei die Überwachungsvorrichtung (19) dazu ausgebildet ist, den Hebelarm ($I_N$) der Abspannkraft ($F_N$), die Ausladung ($I_{G+S}$, $I_{FJ}$) des zumindest einen Lastaufnahmemittels (9, 11) und der Hebelarm ($I_A$) der Totlastkraft ($F_A$) des Auslegers (3) auf eine gemeinsame Kippachse, insbesondere die Wippachse (4) des Ausleger (3), zu beziehen und/oder bezüglich der genannten gemeinsamen Kippachse zu berechnen.

5. Kran nach einem der vorhergehenden Ansprüche, wobei die Bestimmungsmittel (22) zum Bestimmen der Abspannkraft ($F_N$) einen Kraftgeber zum Erfassen der Zugkraft in einem Nackenseil oder -gestänge (6) aufweist und/oder dem genannten Nackenseil oder -gestänge (6) zugeordnet ist.

6. Kran nach einem der vorhergehenden Ansprüche, wobei die gespeicherten Krandaten das Gewicht des Auslegers (3) und/oder das Gewicht einer Auslegerverlängerung (10) und/oder die Länge des Auslegers (3) und/oder die Länge der Auslegerverlängerung (10) und/oder den Abstand des Schwerpunkts (S) des Auslegers (3) von einer Auslegerwippachse (4) und/oder den Abstand des Schwerpunkts der Auslegerverlängerung (10) von der Auslegerwippachse (4) umfassen.

7. Verfahren zum Überwachen der Überlastsicherungsvorrichtung (14) eines Krans (1), die mittels Erfassungsmitteln (15, 16) die an zumindest einem Lastaufnahmemittel (9, 11) wirkende Nutzlast und die Ausladung des zumindest einen Lastaufnahmemittels erfasst und mit einem für die jeweilige Ausladung zulässigen Lastwert aus einer abgespeicherten Lastkurve vergleicht und bei Erreichen oder Überschreiten des zulässigen Lastwerts ein Warnsignal abgibt und/oder zumindest einen Kranantrieb abschaltet und/oder verlangsamt, wobei die Überlastsicherungsvorrichtung (14) von einer Überwachungsvorrichtung (19) auf ihre korrekte Funktion hin überwacht wird, **dadurch gekennzeichnet, dass** von der Überwachungsvorrichtung (19) kontinuierlich auch im Kranbetrieb aus einer laufend bestimmten Abspannkraft ein Abspannmoment bestimmt wird, aus der erfassten Ausladung und der erfassten Nutzlast ein Lastmoment bestimmt wird, aus gespeicherten Krandaten ein Totmoment bestimmt wird, die Differenz zwischen dem bestimmten Abspannmoment und der Summe aus dem genannten Lastmoment und dem Totmoment gebildet wird und bei Überschreiten einer Toleranzschwelle durch die genannte Differenz ein Fehler- und/oder Abschaltsignal abgegeben wird.

## Claims

1. A crane having a boom (3) at which at least one load receiving means (9, 11) is arranged in a raisable and lowerable manner, wherein an overload protection device (14) has detection means (15, 16) for detecting the outreach and the load on the at least one load receiving means (9, 11) and is configured to compare the detected load and the detected outreach with a stored load curve und to switch off and/or slow down a crane drive on a reaching or exceeding of the load curve, and wherein a monitoring device (19) for monitoring the overload protection device (14) is provided and has determination means (22) for determining a tensioning force holding the boom (3) and/or induced in a guy cable (5), wherein the monitoring device (19) is configured to determine a lifting torque ($F_{G+S}$ x $I_{G+S}$ + $F^*_{G+S}$ x $I_{FJ}$) from the detected outreach ($I_{G+S}$, $I_{FJ}$) and the detected load ($F_{G+S}$, $F^*_{G+S}$), **characterized in that** the monitoring device (19) is configured to determine online in crane operation a tensioning torque ($F_N$ x $I_N$) from the determined tensioning force ($F_N$), to determine a dead torque ($F_A$ x $I_A$) while making use of stored crane data, to compare the sum of the named lifting torque ($F_{G+S}$ x $I_{G+S}$ + $F^*_{G+S}$ x $I_{FJ}$) and the named dead torque ($F_A$ x $I_A$) with the tensioning torque ($F_N$ x $I_N$) and then, if a difference of the tensioning torque from said sum of lifting torque and dead torque exceeds a tolerance threshold, to emit an error signal and/or shutdown signal.

2. A crane in accordance with the preceding claim, wherein the boom (3) is luffably supported about a horizontal luffing axis (4) and the detection means (15) of the overload protection device (14) for detecting the outreach have a luffing angle encoder (17) for determining a boom luffing angle or boom setting angle ($\beta$), wherein the monitoring apparatus (19) is configured to take into account the boom setting angle ($\beta$) determined by the luffing angle encoder (17) both on the determination of the lifting torque and of the dead torque and on the determination of the tensioning torque.

3. A crane in accordance with the preceding claim, wherein a lever arm ($I_N$) of the tensioning force ($F_N$) on the boom (3), the outreach ($I_{G+S}$, $I_{FJ}$) of the at least one load receiving means (9, 11), and the lever arm ($I_A$) of the dead lifting force ($F_A$) of the boom (3) can be calculated by the monitoring device (19) from the boom setting angle ($\beta$) determined by the luffing angle encoder (17).

4. A crane in accordance with one of the preceding claims, wherein the monitoring device (19) is configured to relate the lever arm ($I_N$) of the tensioning force ($F_N$), the outreach ($I_{G+S}$, $I_{FJ}$) of the at least one load receiving means (9, 11) and the lever arm ($I_A$) of the dead lifting force ($F_A$) of the boom (3) to a common tilt axis, in particular the luffing axis (4) of the boom (3), and/or to calculate them with respect to the named common tilt axis.

5. A crane in accordance with one of the preceding claims, wherein the determination means (22) for determining the tensioning force ($F_N$) has a force transmitter for detecting the tension force in a neck cable or in neck rods (6) and/or is associated with the named neck cable or neck rods (6).

6. A crane in accordance with one of the preceding claims, wherein the stored crane data comprise the weight of the boom (3) and/or the weight of a boom extension (10) and/or the length of the boom (3) and/or the length of the boom extension (10) and/or the distance of the center of gravity (S) of the boom (3) from a boom luffing axis (4) and/or the distance of the center of gravity of the boom extension (10) from the boom luffing axis (4).

7. A method of monitoring the overload protection device (14) of a crane (1) that detects the useful load acting on at least one load receiving means (9, 11) and the outreach of the at least one load receiving means using detection means (15, 16) and compares them with a load value permitted for the respective outreach from a stored load curve, and emits a warning signal on a reaching or exceeding of the permitted load value and/or at least switches off and/or slows down a crane drive, wherein the overload protection device (14) is monitored for its correct function by a monitoring device (19), **characterized in that** a tensioning torque is also continuously determined in crane operation by the monitoring device (19) from a continuously determined tensioning force, a lifting torque is determined from the detected outreach and from the detected useful load, a dead torque is determined from stored crane data, the difference between the determined tensioning torque and the sum of the named lifting torque and the dead torque is formed, and an error signal and/or shutdown signal is emitted on an exceeding of a tolerance threshold by the named difference.

**Revendications**

1. Grue comprenant une flèche (3), sur laquelle au moins un moyen de réception de charge (9, 11) est monté de manière à pouvoir être monté et descendu, un dispositif de protection contre la surcharge (14) comportant des moyens de détection (15, 16) pour détecter la portée et la charge sur l'au moins un moyen de réception de charge (9, 11) et étant conçu pour comparer la charge détectée et la portée détectée avec une courbe de charge enregistrée et arrêter et/ou ralentir, en cas d'atteinte ou de dépassement de la courbe de charge, un entraînement de grue, et un dispositif de surveillance (19) étant prévu pour surveiller le dispositif de protection contre la surcharge (14) et comportant des moyens de détermination (22) pour déterminer une force de haubanage retenant la flèche (3) et/ou induite dans un hauban (5), le dispositif de surveillance (19) étant conçu pour déterminer un moment de la charge ($F_{G+S} \times I_{G+S} + F^*_{G+S} \times I_{FJ}$) à partir de la portée détectée ($I_{G+S}$, $I_{FJ}$) et de la charge détectée ($F_{G+S}$, $F^*_{G+S}$), **caractérisée en ce que** le dispositif de surveillance (19) est conçu pour déterminer en ligne pendant le fonctionnement de la grue un moment du haubanage ($F_N \times I_N$) à partir de la force de haubanage ($F_N$) déterminée, déterminer à l'aide de données de grue enregistrées un moment mort ($F_A \times I_A$), comparer la somme dudit moment de la charge ($F_{G+S} \times I_{G+S} + F^*_{G+S} \times I_{FJ}$) et dudit moment mort ($F_A \times I_A$) avec le moment du haubanage ($F_N \times I_N$) et ensuite, quand un écart entre le moment du haubanage et ladite somme du moment de la charge et du moment mort dépasse un seuil de tolérance, émettre un signal d'erreur et/ou d'arrêt.

**2.** Grue selon la revendication précédente, dans laquelle la flèche (3) est montée articulée sur un axe d'articulation (4) horizontal et les moyens de détection (15) du dispositif de protection contre la surcharge (14) pour détecter la portée comportent un capteur d'angle d'articulation (17) pour déterminer un angle d'articulation et/ou d'inclinaison de la flèche ($\beta$), le dispositif de surveillance (19) étant conçu pour prendre en compte l'angle d'inclinaison de la flèche ($\beta a$) déterminé par le capteur d'angle d'articulation (17) aussi bien pour la détermination du moment de la charge et du moment mort que pour la détermination du moment du haubanage.

**3.** Grue selon la revendication précédente, dans laquelle un bras de levier ($I_N$) de la force de haubanage ($F_N$) sur la flèche (3), la portée ($I_{G+S}$, $I_{FJ}$) de l'au moins un moyen de réception de charge (9, 11) et le bras de levier ($I_A$) de la force de charge morte ($F_A$) de la flèche (3) peuvent être calculés par le dispositif de surveillance (19) à partir de l'angle d'inclinaison de la flèche ($\beta$) déterminé par le capteur d'angle d'articulation (17).

**4.** Grue selon l'une des revendications précédentes, dans laquelle le dispositif de surveillance (19) est conçu pour rapporter le bras de levier ($I_N$) de la force de haubanage ($F_N$), la portée ($I_{G+S}$, $I_{FJ}$) de l'au moins un moyen de réception de charge (9, 11) et le bras de levier ($I_A$) de la force de charge morte ($F_A$) de la flèche (3) à un axe de basculement commun, en particulier l'axe d'articulation (4) de la flèche (3), et/ou les calculer par rapport audit axe de basculement commun.

**5.** Grue selon l'une des revendications précédentes, dans laquelle les moyens de détermination (22) pour déterminer la force de haubanage ($F_N$) comportent un capteur de force pour détecter la force de traction dans un câble dorsal ou une tringlerie dorsale (6) et/ou sont associés audit câble dorsal ou à ladite tringlerie dorsale (6).

**6.** Grue selon l'une des revendications précédentes, dans laquelle les données de grue enregistrées comprennent le poids de la flèche (3) et/ou le poids d'une fléchette (10) et/ou la longueur de la flèche (3) et/ou la longueur de la fléchette (10) et/ou la distance entre le centre de gravité (S) de la flèche (3) et un axe d'articulation (4) de la flèche et/ou la distance entre le centre de gravité de la fléchette (10) et l'axe d'articulation (4) de la flèche.

**7.** Procédé de surveillance du dispositif de protection contre la surcharge (14) d'une grue (1), qui détecte à l'aide de moyens de détection (15, 16) la charge utile agissant sur au moins un moyen de réception de charge (9, 11) et la portée de l'au moins un moyen de réception de charge et les compare avec une valeur de charge admissible pour la portée respective provenant d'une courbe de charge enregistrée et émet, lorsque la valeur de charge admissible est atteinte ou dépassée, un signal d'avertissement et/ou arrête et/ou ralentit au moins un entraînement de grue, le dispositif de protection contre la surcharge (14) étant surveillé par un dispositif de surveillance (19) en ce qui concerne son fonctionnement correct, **caractérisé en ce qu'**un moment du haubanage est déterminé en continu par le dispositif de surveillance (19), même pendant le fonctionnement de la grue, à partir d'une force de haubanage déterminée en permanence, un moment de la charge est déterminé à partir de la portée détectée et de la charge utile détectée, un moment mort est déterminé à partir de données de grue enregistrées, la différence entre le moment du haubanage déterminé et la somme dudit moment de la charge et du moment mort est formée et en cas de dépassement d'un seuil de tolérance par ladite différence, un signal d'erreur et/ou d'arrêt est émis.

**FIG. 1**

$$F_N \times l_N = F_A \times l_A + F_{G+S} \times l_{G+S} + (F^*_{G+S} \times l_{FJ})$$

$F_N$ : Zug im Nackenseil (entstanden aus Nutzlast + Seilgewicht)

$F_A$ : Krafteinwirkung durch Totlast des Auslegers

$F_{G+S}$ : Krafteinwirkung durch Nutzlast + Seilgewicht

$F^*_{G+S}$ : Krafteinwirkung durch Nutzlast + Seilgewicht am FlyJib (nur optional)

$l_N$ : Hebelarm für Moment aus Zug im Nackenseil

$l_A$ : Hebelarm für Moment aus Totlast Ausleger

$l_{G+S}$ : Hebelarm für Moment Nutzlast + Seilgewicht

$l_{FJ}$ : Hebelarm für Moment Nutzlast + Seilgewicht am FlyJib (nur optional)

EP 3 256 414 B1

# FIG. 2 (Teil 1 von 2)

Sensorpositionen am Kran:

Messachse

①.

22

FlyJib

Nackenseil

Messachse

②. + ③.

16

Ausleger

Anlenkpunkt

Einziehwerk

Neigungssensor

④.

17

EP 3 256 414 B1

Sensorwertverarbeitung in Überwachungsfunktion:    **FIG. 2 (Teil 2 von 2)**

Neigungssensor 15

Neigungssensor    ④    17

④    Messachse
im Nackenseil    24

16    Neigungswinkel
Ausleger

Messachse
Hauptwinde    ②

Messachse Flyjib    ③

Neigungswinkel
Ausleger

SPS

Gesamtzug im Nackenseil

18

18

SPS

**Berechnung Resultierender Zug**
Resultierender Zug = Gesamtzug - Totlastzug

Totlastkurve

12

SPS
**Berechnung Moment HW**
Moment HW = Last HW  x Hebelarm HW

HW = Hauptwinde    20

SPS
**Berechnung Moment FJ**
Moment FJ = Last FJ  x Hebelarm FJ

FJ = Flyjib    20

19    14

Resultierender Zug

SPS
**Berechnung Moment im UZS**
Moment UZS = Res.Gesamtzug x Hebelarm    20

UZS = Uhrzeigersinn

13

21

SPS
**Berechnung Moment im GUZS**
Moment GUZS = Moment HW + Moment FJ    20

GUZS = Gegenuhrzeigersinn

SPS
**Vergleich der beiden Momente UZS und GUZS**
Müssen innerhalb eines vorgegebenen Toleranzwertes übereinstimmen

Winde - Haupthubwerk
Winde - Flyjib
Winde - Einziehwerk

Display in Krankabine (EMS)
Display am Funk

EP 3 256 414 B1

FIG. 3

**FIG. 4**

Last [kg]

Ausladung [m]

EP 3 256 414 B1

**IN DER BESCHREIBUNG AUFGEFÜHRTE DOKUMENTE**

**In der Beschreibung aufgeführte Patentdokumente**

- EP 0667315 A1
- CN 1139413 A
- JP 2000191286 A
- JP 4224929 B
- JP 2008110825 A
- JP 3281481 B